# EUROPEAN PATENT SPECIFICATION

(11) **EP 3 868 510 B1**
(45) Date of publication and mention of the grant of the patent: **13.07.2022**
(21) Application number: 21158248.1
(22) Date of filing: 19.02.2021
(51) Int. Cl.: B23Q 3/06, B23Q 3/08

(54) **WORK CENTRE TO PROCESS SECTION BARS, IN PARTICULAR MADE OF ALUMINIUM, LIGHT ALLOYS, PVC OR THE LIKE**
ARBEITSSTATION ZUR VERARBEITUNG VON PROFILSTÄBEN, INSBESONDERE AUS ALUMINIUM, LEICHTLEGIERUNGEN, PVC ODER DERGLEICHEN
CENTRE DE TRAVAIL POUR TRAITER DES BARRES DE SECTION, EN PARTICULIER EN ALUMINIUM, EN ALLIAGES LÉGERS, EN PVC OU ANALOGUES

(30) Priority: 20.02.2020 IT 202000003488
(43) Date of publication of application: 25.08.2021
(73) Proprietor: F.O.M. Industrie S.r.l., 47841 Cattolica (RN) (IT)
(72) Inventor: LATTANZI, Lorenzo, 61121 Pesaro (PU) (IT)
(74) Representative: Manconi, Stefano

(56) References cited:
- EP-A1- 0 562 216
- EP-A1- 3 406 365
- DE-C1- 4 028 446

## Description

### TECHNICAL FIELD

The invention relates to a work centre to process section bars, in particular made of aluminium, light alloys, PVC or the like, according to the preamble of claim 1 (see for example EP 3 406 365 A1).

### BACKGROUND ART

In the section bar processing industry, a work centre is known, which comprises an elongated base extending in a substantially horizontal first direction; a plurality of cross members, each of which is mounted on the base parallel to a substantially horizontal second direction transverse to the first direction, is movable along the base in the first direction and supports at least one clamping vice designed to hold at least one section bar; and an overhead crane, which extends above the base in the second direction, is provided with an operating head to process (for example, cut and/or mill) the section bars and is movable along the base in the first direction.

Each clamping vice comprises a first jaw, which is fixed to the relative cross member in the second direction, a second jaw, which is movable along the relative cross member in the second direction between a clamping position and a release position to clamp and release at least one section bar, and a support roller, which extends through the two jaws in the second direction and defines, together with the other support rollers, a support surface for the section bar.

Each jaw is provided with a bumper, which is made of an elastically deformable material and is designed to cooperate with a lateral face of the section bar.

Known work centres of the type described above suffer from some drawbacks, which are mainly due to the fact that, when the section bar has a relatively great width in the second direction, the two jaws of the clamping vice are incapable of correctly holding the section bar and of preventing the vibrations generated by the operating head from jeopardizing the precision of the processing carried out.

### DISCLOSURE OF INVENTION

The object of the invention is to provide a work centre to process section bars, in particular made of aluminium, light alloys, PVC or the like, which is designed to eliminate the aforementioned drawbacks in a straightforward and relatively low-cost manner.

According to the invention, there is provided a work centre to process section bars, in particular made of aluminium, light alloys, PVC or the like, according to the appended claims.

### BRIEF DESCRIPTION OF THE DRAWINGS

The invention will now be described with reference to the accompanying drawings showing a non-limiting embodiment thereof, wherein:
figure 1 is a schematic perspective view, with parts removed for greater clarity, of a preferred embodiment of the work centre according to the invention; and
figures 2, 3 and 4 are schematic side views, with parts removed for greater clarity, of a detail of the work centre of figure 1, which is shown in three different operating positions.

### BEST MODE FOR CARRYING OUT THE INVENTION

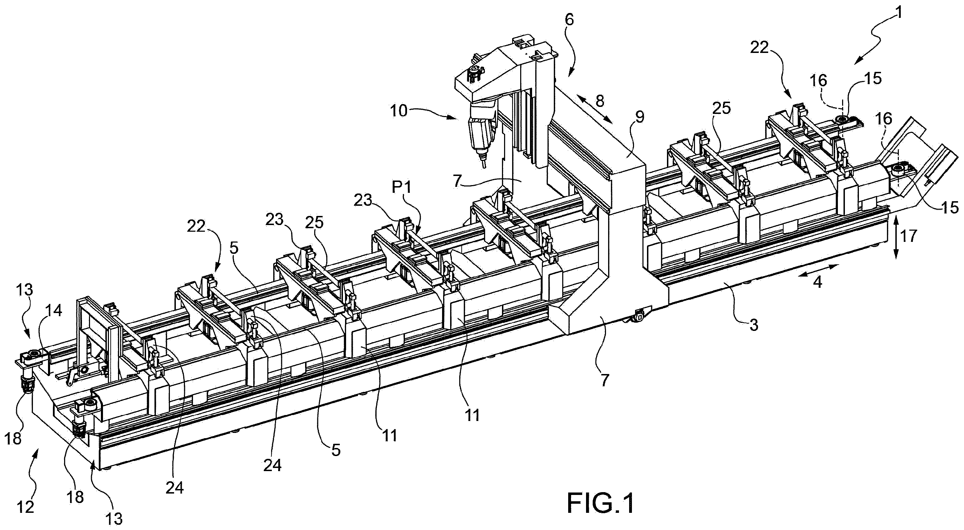

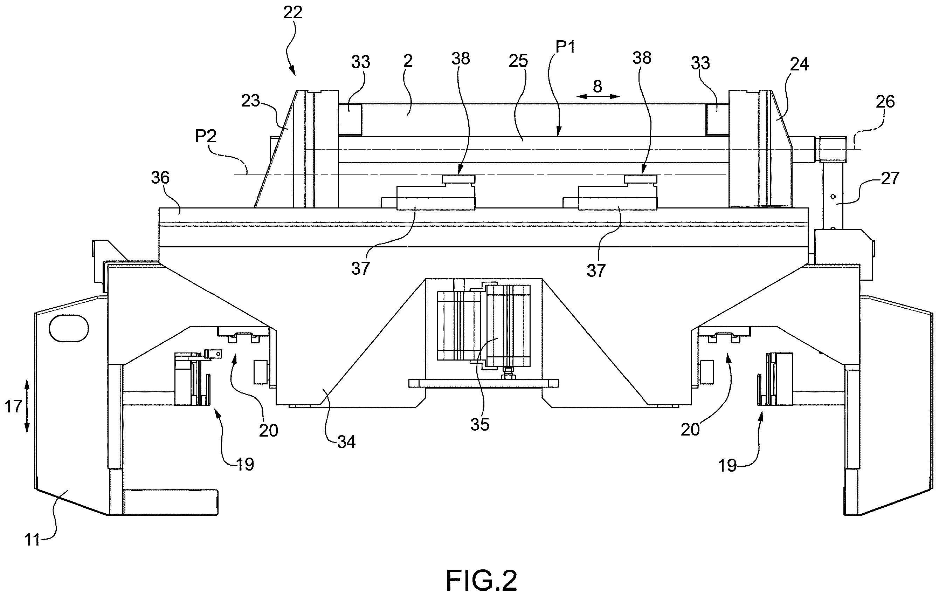

With reference to figures 1 and 2, number 1 indicates, as a whole, a work centre to process section bars 2 made of aluminium, light alloys, PVC or the like and having an elongated shape.

The work centre 1 comprises an elongated base 3, which extends in a horizontal direction 4, is substantially U-shaped and is provided with two longitudinal guide members 5, which are parallel to the direction 4.

The work centre 1 further has a gantry overhead crane 6 comprising a pair of vertical uprights 7, which are arranged on opposite sides of the base 3 in a horizontal direction 8, which is transverse to the direction 4, and are coupled to the base 3 in a known manner so as to make straight movements along the base 3 in the direction 4.

The two uprights 7 carry, connected to their free ends, a cross member 9, which extends above the base 3 in the direction 8 and supports a known operating head 10, which is coupled to the cross member 9 in a known manner so as to make straight movements along the cross member 9 in the direction 8.

The head 10 is configured to process, for example mill and/or drill and/or cut, the section bars 2.

According to a variant which is not shown herein, the overhead crane 6 comprises one single upright 7.

The work centre 1 further has a plurality of cross members 11, which extend between the longitudinal members 5 in the direction 8 and are coupled to the longitudinal members 5 in a sliding manner so as to be moved, by an operating device 12, along the longitudinal members 5 in the direction 4.

The device 12 comprises two belt conveyors 13, which are parallel to one another, extend in the direction 4 and are mounted on opposite sides of the two longitudinal members 5 in the direction 8.

Each conveyor 13 comprises a belt 14, which is wound in a ring shape around a pair of idler pulleys 15 mounted so as to rotate around respective rotation axes 16, which are parallel to one another and to a vertical direction 17, which is orthogonal to the directions 4 and 8.

According to figures 2, 3 and 4, each cross member 11 is provided with two coupling devices 19 to couple the cross member 11 to the belts 14 and with two locking devices 20 to lock the cross member 11 on the longitudinal members 5.

Each cross member 11 is further provided with a straight guide 21, which is fixed on an upper face of the cross member 11 parallel to the direction 8 and supports a clamping vice 22 comprising two holding jaws 23, 24 extending upwards from the cross member 11 in the direction 17.

The vice 22 further comprises a support roller 25, which is mounted so as to rotate around a rotation axis 26 parallel to the direction 8 and defines, together with the rollers 25 of the other vices 22, a horizontal support surface P for a section bar 2.

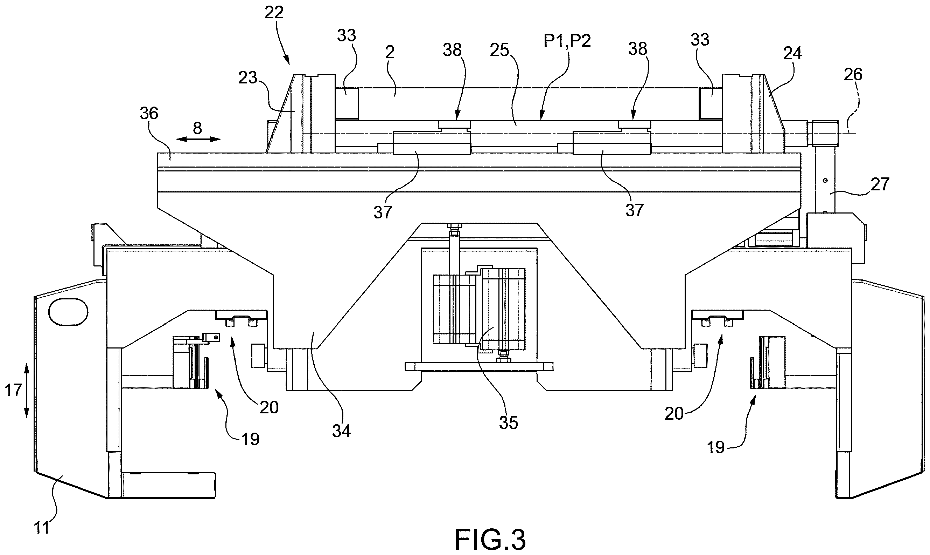

The roller 25 extends through the jaws 23, 24 in the direction 8, is substantially aligned with the guide 21 in the direction 17, is coupled in a rotary manner to the free ends of the output rods 27 (only one of them being shown in figures 2 and 3) of two actuator cylinders (not shown) obtained in the cross member 11 and is moved in the direction 17 by the actuator cylinders (not shown) depending on a height of the section bar 2.

The jaw 23 is fixed to an end of the guide 21, whereas the jaw 24 is coupled to the guide 21 in a sliding manner so as to make straight movements in the direction 8 between a clamping position and a release position to clamp and release a section bar 2.

The jaw 24 is moved along the guide 21 by an operating device 28 comprising a rack 29, which extends along the cross member 11 in the direction 8, is coupled to the cross member 11 in a sliding manner and is connected to an output rod 30 of an actuator cylinder 31 fixed to the cross member 11 parallel to the direction 8.

The jaw 24 is locked on the rack 29 by means of a locking pin 32, whose disengagement from the rack 29 allows the jaw 24 to be selectively moved along the rack 29 in the direction 8.

The jaws 23, 24 are provided with respective bumpers 33, which are made of an elastically deformable material, face one another, substantially have the shape of a parallelepiped and are coupled to the relative jaws 23, 24 in a sliding manner so as to be manually moved in the direction 17 during a set-up of the vice 22.

Each cross member 11 further supports a vertical slide 34, which extends in the direction 8 and is coupled to the cross member 11 in a sliding manner so as to move in the direction 17 due to the thrust of an actuator cylinder 35.

The slide 34 is provided with a straight guide 36, which is fixed on an upper face of the slide 34 parallel to the direction 8 and is engaged in a sliding manner by a plurality of support blocks 37, which are moveable along the guide 36 in the direction 8.

The blocks 37 are delimited by respective flat upper faces 38, which are connected to a pneumatic suction device and define a second support surface P2 for the section bars 2.

According to a variant which is not shown herein, the blocks 37 are mounted on the slide 34 so as to be capable of being removed from it.

The guides 21 and 36 are configured so as to allow the blocks 37 to move:
exclusively between the jaws 23 and 24; or
past at least one of the jaws 23 and 24; or
past both the jaw 23 and the jaw 24.

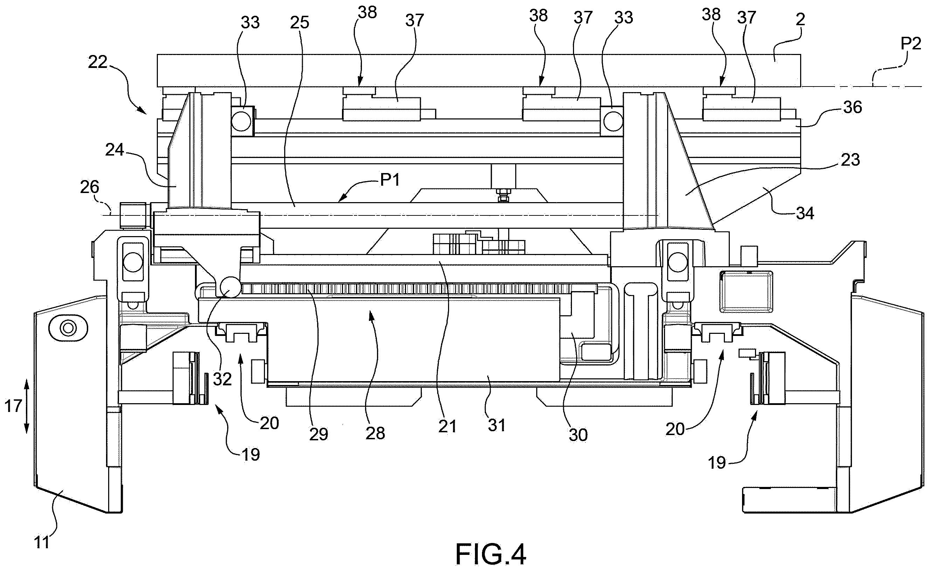

The blocks 37 are moved by the slide 34 between a lowered position (figure 2), in which the surface P2 is under the surface P1 and the blocks 37 disengage the section bar 2, a first lifted position (figure 3), in which the surface P2 is substantially coplanar to the surface P1 and the blocks 37 support a central portion of the section bar 2 extending between the jaws 23 and 24, and a second lifted position (figure 4), in which the surface P2 extends above the surface P1 and the blocks 37 disengage the section bar 2 from the rollers 25.

Therefore, the support blocks 37 correctly support the central portion of section bars 2 having a relatively great width in the direction 8 and, furthermore, allow the operating head 10 to correctly carry out the processing of said section bars 2.

Obviously, when the blocks 37 are arranged in their second lifted positions, the section bar 2 is solely supported by the blocks 37.

According to a variant which is not shown herein, the guide 36 and the blocks 37 are eliminated and the slide 34 is delimited by a flat upper face, which defines the surface P2, is connected to the pneumatic suction device and is moved by the slide 34 between the aforesaid lowered position, first lifted position and second lifted position.

According to a further variant which is not shown herein, the blocks 37 have different heights in the direction 17 and the surface P2 defined by the relative faces 38 has a step-like development in order to correctly support the section bars 2 with a corresponding shape.

## Claims

1. A work centre to process section bars (2), in particular made of aluminium, light alloys, PVC or the like, comprising an elongated base (3) extending in a first direction (4); a plurality of cross members (11), each of which is mounted on the base (3) parallel to a second direction (8), which is transverse to the first direction (4), supports a clamping vice (22) provided with two jaws (23, 24), which are movable relative to one another in the second direction (8) between a clamping position and a release position to clamp and release at least one section bar (2), and further supports first support means (25) defining a first support surface (P1) for the section bar (2); and a gantry (6), which extends above the base (3) in the second direction (8) and is provided with an operating head (10) to process the section bar (2); and **characterized in that** each cross member (11) further supports second support means (34, 37), which define a second support surface (P2) for the section bar (2) connected to a pneumatic suction device and are movable in a third direction (17), which is orthogonal to said first and second directions (4, 8), between a lowered position, in which the second support surface (P2) extends under the first support surface (P1), and a first lifted position.

2. A work centre according to claim 1, wherein, when the second support means (34, 37) are arranged in their first lifted position, the second support surface (P2) is substantially coplanar to the first support surface (P1).

3. A work centre according to claim 1 or 2, wherein the second support means (34, 37) are further movable in a second lifted position, in which the second support surface (P2) extends above the first support surface (P1).

4. A work centre according to any one of the preceding claims, wherein the second support means (34, 37) comprise a slide (34), which is movable in the third direction (17) and is delimited by an upper face defining the second support surface (P2).

5. A work centre according to any one of the claims from 1 to 3, wherein the second support means (34, 37) comprise a slide (34), which is movable in the third direction (17), and at least one support block (37), which is movable along the slide (34) in the second direction (8) and is delimited by an upper face (38) defining the second support surface (P2).

6. A work centre according to claim 5, wherein the slide (34) supports a plurality of support blocks (37) distributed along the slide (34) in the second direction (8) .

7. A work centre according to claim 5 or 6, wherein the support blocks (37) have different heights in the third direction (17) and the second support surface (P2) defined by the relative upper faces (38) has a step-like development.

8. A work centre according to any one of the claims from 5 to 7, wherein each support block (37) is mounted on the relative slide (34) in a removable manner.

9. A work centre according to any one of the claims from 5 to 8, wherein the cross member (11) has a first guide device (21), which is engaged by at least one of the jaws (23, 24) of the clamping vice (22) in a sliding manner, and wherein the slide (34) has a second guide device (36), which is engaged in a sliding manner by the support blocks (37); the guide devices (21, 36) being configured so as to allow the support blocks (37) to move between the jaws (23, 24) and/or past at least one of the jaws (23, 24).

10. A work centre according to any one of the preceding claims, wherein the first support means (25) comprise a support bar extending between the jaws (23, 24).

## Patentansprüche

1. Arbeitszentrum zum Bearbeiten von Profilstäben (2), insbesondere aus Aluminium, Leichtmetalllegierungen, PVC oder dergleichen, umfassend eine längliche Basis (3), die sich in einer ersten Richtung (4) erstreckt; eine Mehrzahl von Querträgern bzw. -gliedern (11), von denen jeder an der Basis (3) parallel zu einer zweiten Richtung (8) montiert ist, die quer zu der ersten Richtung (4) ist, einen Spannschraubstock (22) stützt bzw. trägt, der mit zwei Backen (23, 24) versehen ist, die relativ zueinander in der zweiten Richtung (8) zwischen einer Klemmposition und einer Freigabeposition bewegbar sind, um zumindest einen Profilstab (2) zu klemmen und freizugeben, und ferner erste Stütz- bzw. Trägermittel (25) stützt bzw. trägt, die eine erste Stütz- bzw. Trägerfläche (P1) für den Profilstab (2) definieren; und ein Portal (6), das sich oberhalb der Basis (3) in der zweiten Richtung (8) erstreckt und mit einem Arbeitskopf (10) versehen ist, um den Profilstab (2) zu bearbeiten; und **dadurch gekennzeichnet, dass** jeder Querträger (11) ferner zweite Stütz- bzw. Trägermittel (34, 37) stützt bzw. trägt, die eine zweite Stütz- bzw. Trägerfläche (P2) für den Profilstab (2) definieren, der mit einer pneumatischen Saugvorrichtung verbunden ist, und in einer dritten Richtung (17) bewegbar sind, die orthogonal zu der ersten und der zweiten Richtung (4, 8) ist, und zwar zwischen einer abgesenkten Position, in der sich die zweite Stütz- bzw. Trägerfläche (P2) unter der ersten Stütz- bzw. Trägerfläche (P1) erstreckt, und einer ersten angehobenen Position.

2. Arbeitszentrum nach Anspruch 1, wobei, wenn die zweiten Stützmittel (34, 37) in ihrer ersten angehobenen Position angeordnet sind, die zweite Stützfläche (P2) im Wesentlichen koplanar zu der ersten Stützfläche (P1) ist.

3. Arbeitszentrum nach Anspruch 1 oder 2, wobei die zweiten Stützmittel (34, 37) ferner in eine zweite angehobene Position bewegbar sind, in der sich die zweite Stützfläche (P2) über der ersten Stützfläche (P1) erstreckt.

4. Arbeitszentrum nach einem der vorhergehenden Ansprüche, wobei die zweiten Stützmittel (34, 37) einen Schieber bzw. Schlitten (34) umfassen, der in der dritten Richtung (17) bewegbar ist und durch eine obere Fläche begrenzt ist, welche die zweite Stützfläche (P2) definiert.

5. Arbeitszentrum nach einem der Ansprüche 1 bis 3, wobei die zweiten Stützmittel (34, 37) einen Schieber bzw. Schlitten (34), der in der dritten Richtung (17) bewegbar ist, und zumindest einen Stütz- bzw. Trägerblock (37) umfassen, der entlang des Schlittens (34) in der zweiten Richtung (8) bewegbar ist und durch eine obere Fläche (38) begrenzt ist, welche die zweite Stützfläche (P2) definiert.

6. Arbeitszentrum nach Anspruch 5, wobei der Schlitten (34) eine Mehrzahl von Stütz- bzw. Trägerblöcken (37) stützt bzw. trägt, die entlang des Schlittens (34) in der zweiten Richtung (8) verteilt sind.

7. Arbeitszentrum nach Anspruch 5 oder 6, wobei die Stützblöcke (37) unterschiedliche Höhen in der dritten Richtung (17) aufweisen und die zweite Stützfläche (P2), die durch die relativen oberen Flächen (38) definiert ist, eine stufenähnliche Entwicklung bzw. Verlauf aufweist.

8. Arbeitszentrum nach einem der Ansprüche 5 bis 7, wobei jeder Stützblock (37) auf entfernbare Weise auf bzw. an dem jeweiligen Schlitten (34) montiert ist.

9. Arbeitszentrum nach einem der Ansprüche 5 bis 8, wobei der Querträger (11) eine erste Führungseinrichtung (21) aufweist, in die zumindest eine der Backen (23, 24) der Klemmvorrichtung (22) auf verschiebbare Weise eingreift, und wobei der Schlitten (34) eine zweite Führungseinrichtung (36) aufweist, in welche die Stützblöcke (37) auf verschiebbare Weise eingreifen; wobei die Führungsvorrichtungen (21, 36) so konfiguriert sind, dass sie den Stützblöcken (37) erlauben, sich zwischen den Backen (23, 24) und/oder an zumindest einer der Backen (23, 24) vorbei zu bewegen.

10. Arbeitszentrum nach einem der vorhergehenden Ansprüche, wobei die ersten Stützmittel (25) eine Stütz- bzw. Trägerstange umfassen, die sich zwischen den Backen (23, 24) erstreckt.

## Revendications

1. Centre de travail pour traiter des barres de section (2), en particulier fabriquées en aluminium, alliages légers, PVC ou analogues, comprenant une base (3) allongée s'étendant dans une première direction (4); une pluralité d'éléments de traverse (11), dont chacun est monté sur la base (3) parallèlement à une deuxième direction (8), qui est transversale à la première direction (4), supporte un étau de serrage (22) prévu avec deux mâchoires (23, 24) qui sont mobiles l'une par rapport à l'autre dans la deuxième direction (8) entre une position de serrage et une position de libération pour serrer et libérer au moins une barre de section (2), et supporte en outre des premiers moyens de support (25) définissant une première surface de support (P1) pour la barre de section (2) ; et un portique (6), qui s'étend au-dessus de la base (3) dans la deuxième direction (8) et est prévu avec une tête opérationnelle (10) pour traiter la barre de section (2) ; et **caractérisé en ce que** chaque élément de traverse (11) supporte en outre des deuxièmes moyens de support (34, 37), qui définissent une deuxième surface de support (P2) pour la barre de section (2) reliée à un dispositif d'aspiration pneumatique et sont mobiles dans une troisième direction (17), qui est orthogonale auxdites première et deuxième directions (4, 8), entre une position abaissée, dans laquelle la deuxième surface de support (P2) s'étend au-dessous de la première surface de support (P1), et une première position relevée.

2. Centre de travail selon la revendication 1, dans lequel, lorsque les deuxièmes moyens de support (34, 37) sont agencés dans leur première position relevée, la deuxième surface de support (P2) est sensiblement coplanaire à la première surface de support (P1).

3. Centre de travail selon la revendication 1 ou 2, dans lequel les deuxièmes moyens de support (34, 37) sont en outre mobiles dans une deuxième position relevée, dans laquelle la deuxième surface de support (P2) s'étend au-dessus de la première surface de support (P1).

4. Centre de travail selon l'une quelconque des revendications précédentes, dans lequel les deuxièmes moyens de support (34, 37) comprennent une glissière (34), qui est mobile dans la troisième direction (17) et est délimitée par une face supérieure définissant la deuxième surface de support (P2).

5. Centre de travail selon l'une quelconque des revendications 1 à 3, dans lequel les deuxièmes moyens de support (34, 37) comprennent une glissière (34), qui est mobile dans la troisième direction (17), et au moins un bloc de support (37), qui est mobile au long de la glissière (34) dans la deuxième direction (8) et est délimité par une face supérieure (38) définissant la deuxième surface de support (P2).

6. Centre de travail selon la revendication 5, dans lequel la glissière (34) supporte une pluralité de blocs de support (37) répartis au long de la glissière (34) dans la deuxième direction (8).

7. Centre de travail selon la revendication 5 ou 6, dans lequel les blocs de support (37) ont des hauteurs différentes dans la troisième direction (17) et la deuxième surface de support (P2) définie par les faces supérieures relatives (38) présente une conception étagée.

8. Centre de travail selon l'une quelconque des revendications 5 à 7, dans lequel chaque bloc de support (37) est monté sur la glissière relative (34) de manière amovible.

9. Centre de travail selon l'une quelconque des revendications 5 à 8, dans lequel l'élément de traverse (11) présente un premier dispositif de guidage (21), qui est mis en prise avec au moins l'une des mâchoires (23, 24) de l'étau de serrage (22) de manière coulissante, et dans lequel la glissière (34) présente un deuxième dispositif de guidage (36), qui est mis en prise de manière coulissante avec les blocs de support (37) ; les dispositifs de guidage (21, 36) étant configurés de manière à permettre aux blocs de support (37) de se déplacer entre les mâchoires (23, 24) et/ou au-delà d'au moins l'une des mâchoires (23, 24).

10. Centre de travail selon l'une quelconque des revendications précédentes, dans lequel les premiers moyens de support (25) comprennent une barre de support s'étendant entre les mâchoires (23, 24).
